# EUROPEAN PATENT SPECIFICATION

(11) **EP 2 017 167 B1**
(45) Date of publication and mention of the grant of the patent: **01.01.2014**
(21) Application number: 08012782.2
(22) Date of filing: 15.07.2008
(51) Int. Cl.: B62J 6/02

(54) **Vehicle**
Fahrzeug
Véhicule

(30) Priority: 19.07.2007 JP 2007188742
(43) Date of publication of application: 21.01.2009
(73) Proprietor: Yamaha Hatsudoki Kabushiki Kaisha, Shizuoka-ken Shizuoka 438-8501 (JP)
(72) Inventor: Ohzono, Gen c/o Yamaha Hatsudoki Kabushiki Kaisha, Iwata-shi Shizuoka-ken 438-8501 (JP)
(74) Representative: Grünecker, Kinkeldey, Stockmair & Schwanhäusser

(56) References cited:
- GB-A- 2 342 212
- JP-U- 62 103 102
- US-A- 1 882 493
- US-B1- 7 175 321

## Description

The present invention relates to a vehicle, in particular to a straddle-type vehicle such as a motorcycle, having a headlight unit.

Some straddle-type vehicles effectively utilize a portion of illumination light emitted from a headlight to illuminate surroundings of a front portion of the vehicle, handlebar switches, and the like. An example lighting device including such a headlight is disclosed in JP-U-Sho 62-103102.

The lighting device described in said document includes a light guide for guiding illumination light, except for a portion of the light having passed through a lens, reflected from a reflector of the headlight. The light guide allows to guide illumination light to the outside therethrough, thereby effectively utilizing the illumination light as lighting of, for example, surroundings of a front portion of a vehicle.

However, the lighting device according to JP-U-Sho 62-103102 only directs the illumination light emitted from the headlight downward of the vehicle to illuminate the surroundings of the front portion of the vehicle, and has not attained good use of the lighting device other than lighting yet. The present invention is made in view of the above circumstance.

It is an objective of the present invention to provide a vehicle capable of effectively utilizing illumination light emitted from a headlight.

According to the present invention, said objective is solved by a vehicle, in particular straddle-type vehicle such as a motorcycle, comprising: at least a headlight unit having at least a light source; a cowling placed to surround the headlight unit; a front fender placed below the cowling; and a light guide window, through which a portion of light emitted from the light source shines out, being provided below the headlight unit, the light guide window being located to project said portion of light onto the front fender to form a predetermined pattern substantially corresponding to a predetermined shape of the light guide window.

Accordingly, because the light guide window, through which a portion of light emitted from the light source goes out, is provided below the headlight unit, and the light that goes out through the light guide window is projected onto the front fender to form a predetermined pattern corresponding to a predetermined shape of the light guide window, the predetermined pattern is projected onto the front fender with the portion of the light emitted from the light source of the headlight unit.

This way, when it is dark, visibility of the vehicle, in particular of the straddle-type vehicle, from the side and a side-front direction of said vehicle can be improved. No further energy consuming light sources are necessary.

Moreover, the front fender around a tire can be utilized as what is called a decorative light component, thereby improving a design (appearance) of the vehicle for night driving. Consequently, a commercial value of the straddle-type vehicle is increased. Furthermore, because the illumination light emitted from the headlight unit can be effectively utilized as light for the decorative light component, this configuration is less expensive than attaching an additional decorative component.

Preferably, the predetermined pattern is a substantially V-shaped pattern.

Consequently, visibility from the side of the vehicle can be further improved, in particular when the straddle-type vehicle is moving.

Preferably, the headlight unit comprises at least a lens, preferably having a lower area located to emit the portion of light from the headlight unit, preferably before said portion of light reaches the light guide window.

Further, preferably the lens comprises at least a lower lens located to emit the aforesaid portion of light and an upper lens located to emit another portion of light, emitted from the light source, to illuminate an area ahead of the vehicle for the driver when driving said vehicle.

Still further, preferably the lower lens is inclined with regard to the upper lens, and/or in longitudinal direction of the vehicle the lower lens is set back with regard to a lower portion of the upper lens towards the light source.

Yet further still, preferably the lower lens is uncoated.

Preferably, the lens is continuous with the cowling.

According to a preferred embodiment, the headlight unit comprises a reflector which, preferably, is located to reflect at least a part of the aforesaid portion of light towards the light guide window.

Preferably, the reflector comprises at least a front opening into which the lens is fitted.

According to another preferred embodiment, the vehicle comprises two headlight units which are arranged on the left and right side of the vehicle, preferably in a substantial V-shape.

Preferably, the light guide window is provided in a clearance between a bottom edge of the headlight unit and the cowling.

Further, preferably the light guide window includes a condensing lens capable of concentrating light.

Still further, preferably the light guide window is made of a colored light-permeable material.

In the following, the present invention is explained in greater detail by means of embodiments thereof in conjunction with the accompanying drawings, wherein:
- FIG. 1: is an external side view showing a side structure of a straddle-type vehicle 100 according to an embodiment;
- FIG. 2(A): is a headlight unit 10, a cowling 20, and their surroundings as viewed along a direction indicated by an arrow 60;
- FIG. 2(B): is a view showing an example of a light image pattern 44 formed on an upper surface 31 of a front fender 30;
- FIG. 3: is an external perspective view of the cowling 20 according to the embodiment;
- FIG. 4: is an external front view of the headlight unit 10 according to the embodiment;
- FIG. 5: is a cross-sectional view taken along the line A-A of FIG. 4; and
- FIG. 6: is a cross-sectional view taken along the line B-B of FIG. 4.

Among others, the following reference signs are used in the figures:
10: headlight unit
12: lens (front illuminating section)
12a: upper lens
12b: lower lens
14: reflector
16: bulb (light source)
18: bottom edge
20: cowling
21: center portion
22: opening
28: bottom edge
30: front fender
31: upper surface
32: front tire
40: light guide window
42: light
44: light image pattern
80: handlebar
100: straddle-type vehicle

Embodiments will be described below with reference to the drawings. In the drawings described below, elements or portions that provide the identical effect will be denoted by the same reference numeral. Meanwhile, the present teaching is not limited the embodiments below.

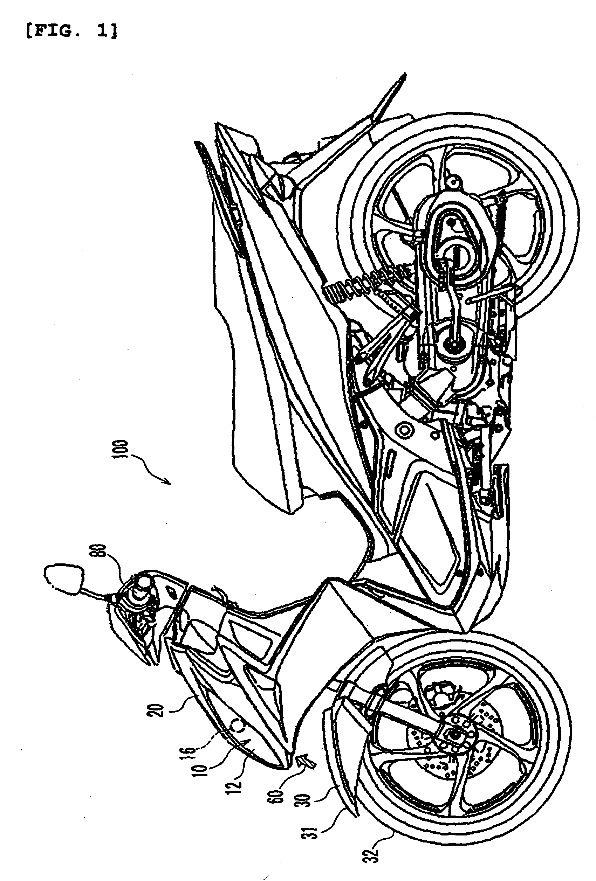

A straddle-type vehicle 100 according to an embodiment will be described with reference to FIG. 1. FIG. 1 is an external side view schematically showing a side of the straddle-type vehicle 100.

The straddle-type vehicle 100 (hereinafter also referred to as the "vehicle") is what is called an underbone-type motorcycle. In general, a straddle-type vehicle typically comprises a body frame and a seat on which a rider can be seated straddling the body frame when being seated. However, also scooter-type vehicles, on which riders sit with legs closed, are included in the meaning of straddle-type vehicles. The straddle-type vehicle 100 is formed of a headlight unit 10, a cowling 20, and a front fender 30.

The headlight unit 10 is an illuminating lamp for night driving. A headlamp unit formed of a pair of a left and a right headlamps is employed as the headlight unit 10 in this embodiment. The headlight unit 10 includes front illuminating sections (lenses) 12 protruding frontward of the vehicle, reflectors 14 functioning as reflecting mirrors, and light sources (bulbs) 16 for emitting light. Light (hereinafter also referred to as "illumination light") emitted from each of the light sources (bulbs) 16 is reflected from the reflectors and passes through a corresponding one of the front illuminating sections (lenses) 12 to illuminate an area ahead of the vehicle. The cowling 20 is placed to surround the headlight unit 10.

The cowling 20 (referred to as a "front cover" in some cases) is a cover member attached to the vehicle to cover a front portion of the vehicle. The cowling 20 of this embodiment is attached to the vehicle at a position below and to the front of a handlebar 80, above a front tire 32. The lenses 12 each forming a portion of the headlight unit 10 are provided on a front surface of the cowling 20. The front fender 30 is provided below the cowling 20.

The front fender 30 of this embodiment is positioned above the front tire 32 and serves as a guard against mud splashed up by the front tire 32. The front fender 30 has a shape capable of functioning as a mudguard. In the example shown in the drawings, the front fender 30 has a curved shape to cover the front tire 32 from above.

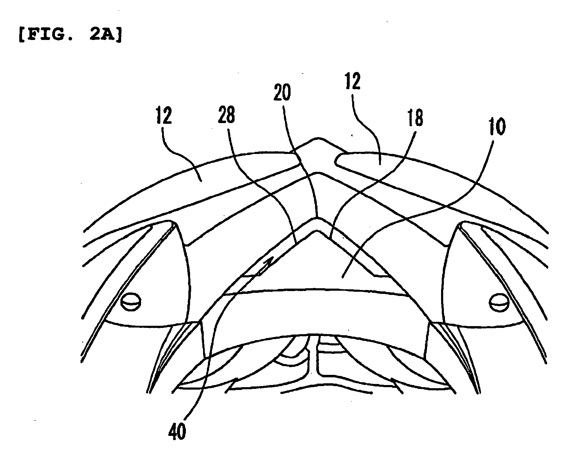

FIG. 2(A) shows the headlight unit 10, the cowling 20, and their surroundings as viewed up from a position at which the front fender 30 is provided (from an obliquely lower position, in a direction indicated by arrow 60).

A light guide window 40 is provided below the headlight unit 10. The light guide window 40 has a function of allowing a portion of light emitted from the light source 16 of the headlight unit 10 to go out. In other words, the light guide window 40 is configured to allow illumination light emitted from the headlight to leak through the light guide window 40. In this embodiment, a clearance (that is, a through opening) is created in a boundary between a bottom edge 18 of the headlight unit 10 and the cowling 20 as the light guide window 40. The light guide window 40 is shaped to allow illumination light emitted from the headlight to leak. Hence, the light guide window 40 can take various shapes (a V shape in the example shown in the drawings). When the light guide window 40 having such a structure is provided, illumination light emitted from the headlight can be projected not only onto the area ahead of the vehicle but also onto an area downward of the vehicle.

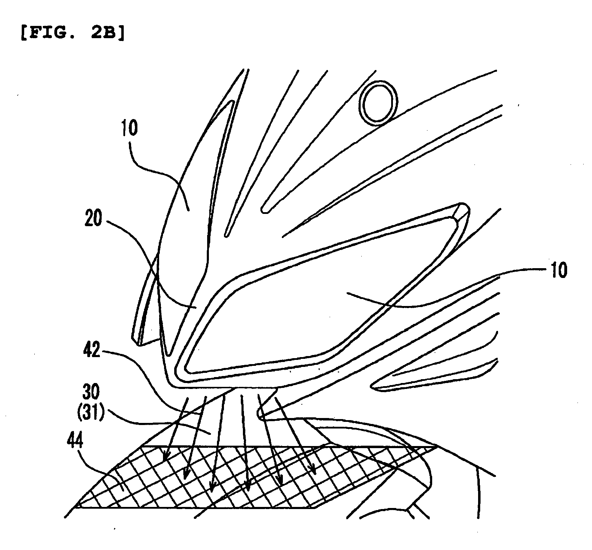

The thus-downwardly directed light (light 42 going out through the light guide window 40) is projected onto the front fender 30 to form a predetermined pattern corresponding to a predetermined shape of the light guide window 40. In other words, the light 42 having leaked through the light guide window 40 is selectively projected onto an upper surface 31 of the front fender 30 and forms a light image pattern 44 thereon substantially corresponding to the shape of the light guide window 40 on the upper surface 31. FIG. 2(B) shows an example of the light image pattern 44 formed on the upper surface 31 of the front fender 30. FIG. 2(B) shows the light image pattern 44 (a part of which is not shown) assuming a V shape corresponding to the V shape of the light guide window 40.

According to the straddle-type vehicle 100, the light guide window 40, through which a portion of light emitted from the light source 16 goes out, is provided below the headlight unit 10. The light going out through the light guide window 40 is projected onto the front fender 30 to form a predetermined pattern (for example, a V-shaped pattern) corresponding to a predetermined shape (for example, a V shape) of the light guide window 40. Hence, the portion of the light emitted from the light source 16 of the headlight unit 10 forms the predetermined pattern (for example, the V-shaped pattern) on the front fender 30.

Preferably, in order to further improve the visibility of the vehicle from the side-front direction of said vehicle, two headlight units 10, 10 can be arranged on the left and right side of the vehicle, preferably in a substantial V-shape.

According to this configuration, because the front fender 30 can be used as a what is called a decorative light component, a design (appearance) of the vehicle for night driving is improved. Consequently, a commercial value of the straddle-type vehicle is increased. Furthermore, because the illumination light emitted from the headlight unit 10 can be used as light for the decorative light component, it is less expensive than attaching an additional decorative component is created.

Meanwhile, in the example described above, the light guide window 40 is implemented as the clearance (that is, the through opening) between the headlight unit 10 and the cowling 20, however, the shape of the light guide window 40 is not limited to such an opening. For example, a light-permeable member (typically a trans parent member) may be embedded in the opening. Consequently, the clearance between the headlight unit 10 and the cowling 20 can be sealed, thereby forming the headlight unit 10 as a sealed structure. Preferred examples of such a light-permeable member include an acrylic, glass, resin, and the like.

The light-permeable member is not limited to a colorless, transparent member, and can be a colored light-permeable member. When a colored light-permeable member is used, the light image pattern projected onto the front fender 30 is colorful (brightly colored), thereby further improving the design (appearance) of the vehicle. Examples of the colored light-permeable member include acrylic resins, glasses, and polycarbonates. Alternatively, pigmented coating (e.g. clear blue coating) may be applied onto a colorless, transparent member. These configurations allow a vehicle to have various appearances (e.g., causing the vehicle to look as if the vehicle is decorated with a black light).

The light guide window 40 may include a condensing lens (e.g. a convex lens) capable of concentrating light. When light is concentrated through the condensing lens, a further fine pattern (e.g., characters) can be projected onto the front fender 30. Alternatively, the light guide window 40 may be a combination of a condensing lens and a colored light-permeable member. For example, a condensing lens, onto a surface of which a colored film serving as the colored light-permeable member is affixed, can be favorably used as the light guide window 40.

The shape and size of the light guide window 40 may be arbitrarily selected according to rider's preference. More specifically, the members (e.g., the colored light-permeable member and the condensing lens) forming the light guide window 40 can be detachably attached so as to be changed to suit the shape and size of the rider's preference. Examples of the various selectable shapes include, in addition to the V shape shown in the drawings, a star shape, an X shape, and a heart shape.

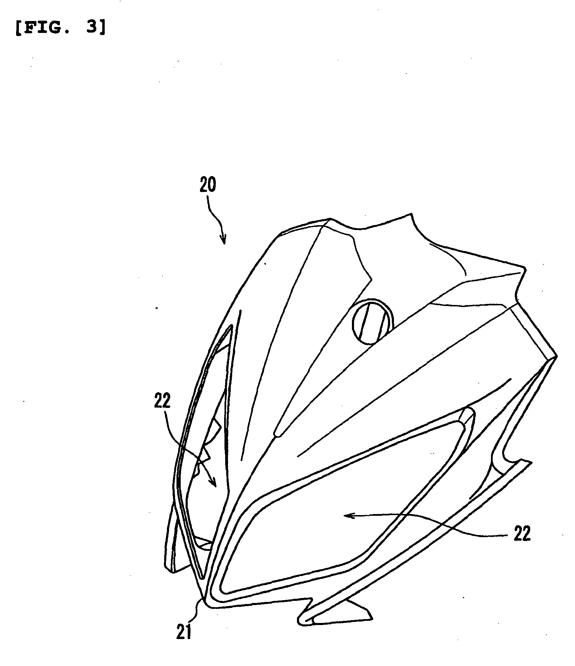

The configurations of the headlight unit 10 and the cowling 20 according to this embodiment will be described in more detail with reference to FIGs. 3 to 6.

The configuration of the cowling 20 of this embodiment will be described with reference to FIG. 3 first. FIG. 3 is an external perspective view of the cowling 20.

The cowling 20 for accommodating the headlight unit 10 therein is made of an opaque resin material. The cowling 20 of this embodiment has a center portion 21, in the vehicle width direction, protruding frontward of the vehicle. The cowling 20 extends from the center portion 21 curving laterally rearward to the left and right. A pair of a left and a right openings 22 are defined in the laterally and rearwardly extending portions. The openings 22 are provided to expose the lenses 12 of the headlight unit 10 therethrough. A large space is created inside the cowling 20 to accommodate the headlight unit 10 therein.

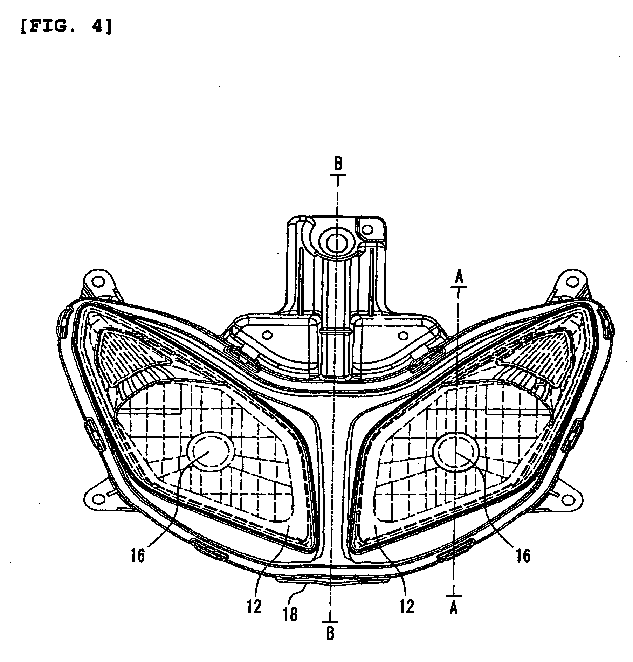

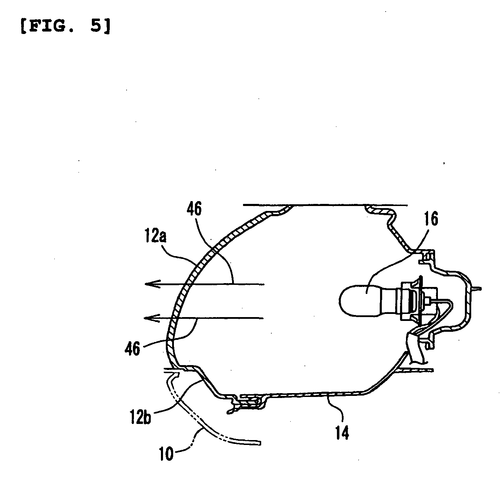

The configuration of the headlight unit 10 of this embodiment will be described with reference to FIGs. 4 and 5. FIG. 4 is an external front view of the headlight unit 10 according to this embodiment. FIG. 5 is a cross-sectional view taken along the line A-A of FIG. 4.

A multi-reflector headlamp unit formed of a pair of a left and a right headlamps is employed as the headlight unit 10 in this embodiment. The headlight unit 10 includes the lenses 12 fitted into front openings of the reflector 14 and the bulbs 16 placed behind the reflectors 14.

The lenses 12 of this embodiment are each generally in a parallelogram shape as viewed from the front of the vehicle and continuous with the front surface of the cowling 20, forming an inverted V shape. Each of the lenses 12 is made of an light-permeable material (e.g. acrylic resins, glasses, and polycarbonates) and includes an upper lens 12a and a lower lens 12b. In contrast to a lower lens of a typical headlight lens, an opaque treatment (e.g., black coating) for shielding light is not applied to the lower lens 12b of this embodiment. Hence, light can pass through the lower lens 12b. Accordingly, illumination light emitted from the bulb 16 can pass not only through the upper lens 12a but also through the lower lens 12b. In this example, an incandescent bulb is employed as the bulb 16. The bulb 16 may alternatively a halogen bulb containing halogen therein.

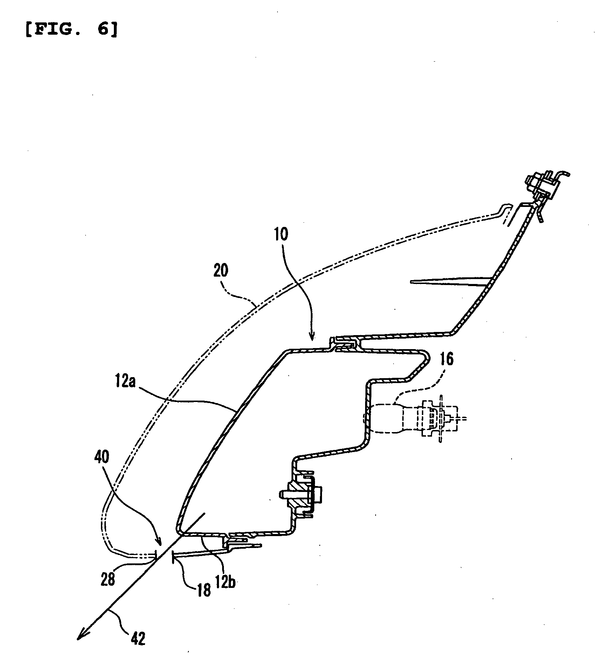

A mechanism for causing the illumination light passed through the lower lens 12b to pass through the light guide window 40 will be described with reference to FIG. 6 in addition to FIGs. 4 and 5. FIG. 6 is a cross-sectional view taken along the line B-B of FIG. 4.

With regard to Fig. 5, the lens 12 comprises the lower lens 12b which is located to emit the aforesaid portion of light 42 directed towards the light guide window 40. Moreover, the lens 12 comprises the upper lens 12a which is located to emit another portion of light 46 / main portion of light emitted from the bulb 16 to illuminate the area ahead of the vehicle, i.e. the road, for the driver, respectively the rider of the straddle-type vehicle, when driving said vehicle.

In Fig. 5, the lower lens 12b is preferably inclined with regard to the upper lens 12a. Alternatively or additionally, in longitudinal direction of the vehicle the lower lens 12b is set back toward the bulb 16 compared to the position of a lower portion of the upper lens 12a.

As shown in FIG. 6, the light guide window 40 of this embodiment is the opening provided below the headlight unit 10. An outer edge demarcating the opening is formed with the bottom edge 18 of the headlight unit 10 and a bottom edge 28 of the cowling 20. In other words, the light guide window 40 is the clearance between the headlight unit 10 and the cowling 20 in this embodiment. The illumination light having passed through the lower lens 12b passes through the light guide window 40.

According to the above configuration, as indicated by arrows 46 in FIG. 5, a portion of the illumination light emitted from the bulb 16 is reflected from the reflector 14 to pass through the upper lens 12a and illuminate an area ahead of the vehicle. Furthermore, as indicated by an arrow 42 in FIG. 6, a portion of the illumination light emitted from the bulb 16 sequentially passes through the uncoated lower lens 12b and the light guide window 40, thereby selectively illuminating an area below the cowling 20 (and accordingly the front fender 30 below the cowling 20). According to this configuration, by changing the shape (that is, the shape of the lower edge 18 of the headlight unit 10 and that of the lower edge 28 of the cowling 20) of the outer edge demarcating the light guide window 40, the light image pattern projected onto the front fender 30 can be specifically changed.

The lens 12 has a lower area located to emit the portion of light indicated by the arrow 42 from the headlight unit 10 before said position of light 42 reaches the light guide window 40.

Meanwhile, the light guide window 40 is positioned so that light leaked through the light guide window 40 is selectively projected onto the front fender 30. More specifically, the position, at which the light guide window 40 is provided, can be adjusted as required in accordance with a positional relationship between the light source 16 and the front fender 30 so that light emitted from the light source 16 (the light may include not only light directly emitted from the light source 16 but also light reflected from the reflector 14) appropriately impinges the front fender 30 through the light window 40. This way, at least a part of the portion of light 42 is reflected by said reflector 14 towards the light guide window 40.

In this embodiment, the light guide window 40 is the clearance between the headlight unit 10 and the cowling 20. However, the location of the light guide window 40 is not limited thereto, and may be provided at another portion. For example, the light guide window 40 can be a through hole of a predetermined shape defined in the bottom surface of the cowling 20 (or the headlight unit 10). It should be noted that the configuration of using the clearance between the headlight unit 10 and the cowling 20 as the light guide window 40 is advantageous because the need of providing an additional through hole is omitted, which can simplify the manufacturing process.

The "straddle-type vehicle" referred to in the specification is not limited to an astride-riding type vehicle, and includes a vehicle type (typically a scooter-type vehicle) on which a rider seats with his/her legs closed. The straddle-type vehicle 100 shown in FIG. 1 is an underbone-type motorcycle. However, the straddle-type vehicle 100 is not limited thereto, and the teaching above can be applied to any vehicle, in particular straddle-type vehicle, having a headlight unit. The teaching can be applied to, in addition to underbone-type motorcycles, four-wheel buggies (ATV: All Terrain Vehicles) and snow mobiles, for example.

The embodiment above provides a straddle-type vehicle capable of effectively utilizing illumination light emitted from a headlight.

The description above discloses (among others) an embodiment of a straddle-type vehicle comprising: a headlight unit having a light source; a cowling placed to surround the headlight unit; and a front fender placed below the cowling, wherein a light guide window, through which a portion of light emitted from the light source goes out, is provided below the headlight unit; and the light that goes out through the light guide window is projected onto the front fender to form a predetermined pattern corresponding to a predetermined shape of the light guide window.

Preferably, the predetermined pattern is a V-shaped pattern.

Preferably, the light guide window is provided in a clearance between a bottom edge of the headlight unit and the cowling.

Further, preferably the light guide window includes a condensing lens capable of concentrating light.

Further, preferably the light guide window is made of a colored light-permeable material.

In order to provide a straddle-type vehicle capable of effectively utilizing illumination light emitted from a headlight, an embodiment of a straddle-type vehicle 100 includes a headlight unit 10 having a light source 16, a cowling 20 placed to surround the headlight unit 10, and a front fender 30 placed below the cowling 20. A light guide window 40, through which a portion of light emitted from the light source 16 goes out, is provided below the headlight unit 10. The light going out through the light guide window 40 is projected onto the front fender 30 to form a predetermined pattern corresponding to a predetermined shape of the light guide window 40.

## Claims

1. Vehicle, in particular straddle-type vehicle such as a motorcycle, comprising:
at least a headlight unit (10) having at least a light source (16);
a cowling (20) placed to surround the headlight unit (10);
a front fender (30) placed below the cowling (20); and
a light guide window (40), through which a portion of light (42) emitted from the light source (16) shines out, being provided below the headlight unit (10),
**characterized in that** the light guide window (40) being located to project said portion of light (42) onto the front fender (30) to form a predetermined pattern (44) substantially corresponding to a predetermined shape of the light guide window (40).

2. Vehicle according to claim 1, wherein the predetermined pattern (44) is a substantially V-shaped pattern.

3. Vehicle according to claim 1 or 2, wherein the headlight unit (10) comprises at least a lens (12), preferably having a lower area located to emit the portion of light (42) from the headlight unit (10), preferably before said portion of light (42) reaches the light guide window (40).

4. Vehicle according to claim 3, wherein the lens (12) comprises at least a lower lens (12b) located to emit the aforesaid portion of light (42) and an upper lens (12a) located to emit another portion of light (46), emitted from the light source (16), to illuminate an area ahead of the vehicle for the driver when driving said vehicle.

5. Vehicle according to claim 4, wherein the lower lens (12b) is inclined with regard to the upper lens (12a), and/or in longitudinal direction of the vehicle the lower lens (12b) is set back with regard to a lower portion of the upper lens (12a) towards the light source (16).

6. Vehicle according to claim 4 or 5, wherein the lower lens (12b) is uncoated.

7. Vehicle according to one of claims 3 to 6, wherein the lens (12) is continuous with the cowling (20).

8. Vehicle according to one of claims 1 to 7, wherein the headlight unit (10) comprises a reflector (14) which, preferably, is located to reflect at least a part of the aforesaid portion of light (42) towards the light guide window (40).

9. Vehicle according to claim 8, wherein the reflector (14) comprises at least a front opening into which the lens (12) is fitted.

10. Vehicle according to one of claims 1 to 9, comprising two headlight units (10,10) which are arranged on the left and right side of the vehicle, preferably in a substantial V-shape.

11. Vehicle according to one of claims 1 to 10, wherein the light guide window (40) is provided in a clearance between a bottom edge (18) of the headlight unit (10) and the cowling (20).

12. Vehicle according to one of claims 1 to 11, wherein the light guide window (40) includes a condensing lens capable of concentrating light.

13. Vehicle according to one of claims 1 to 12, wherein the light guide window (40) is made of a colored light-permeable material.

## Patentansprüche

1. Fahrzeug, insbesondere Grätschsitz-Fahrzeug, wie beispielsweise ein Motorrad, das umfasst:
wenigstens eine Scheinwerfereinheit (10) mit wenigstens einer Lichtquelle (16);
eine Verkleidung (20), die so angeordnet ist, dass sie die Scheinwerfereinheit (10) umschließt;
ein vorderes Schutzblech (30), das unterhalb der Verkleidung (20) angeordnet ist; und
ein Lichtleitfenster (40), durch das ein Anteil von Licht (42), das von der Lichtquelle (16) emittiert wird, nach außen scheint, und das unterhalb der Scheinwerfereinheit (10) vorhanden ist,
**dadurch gekennzeichnet, dass** das Lichtleitfenster (40) so positioniert ist, dass es den Anteil des Lichtes (42) auf das vordere Schutzblech (30) projiziert, um ein vorgegebenes Muster (44) auszubilden, das im Wesentlichen einer vorgegebenen Form des Lichtleitfensters (40) entspricht.

2. Fahrzeug nach Anspruch 1, wobei das vorgegebene Muster (44) ein im Wesentlichen V-förmiges Muster ist.

3. Fahrzeug nach Anspruch 1 oder 2, wobei die Scheinwerfereinheit (10) wenigstens eine Linse (12) umfasst, die vorzugsweise einen unteren Bereich aufweist, der so positioniert ist, dass er den Anteil des Lichtes (42) von der Scheinwerfereinheit (10) vorzugsweise emittiert, bevor der Anteil des Lichtes (42) das Lichtleitfenster (40) erreicht.

4. Fahrzeug nach Anspruch 3, wobei die Linse (12) wenigstens eine untere Linse (12b), die so angeordnet ist, dass sie den Anteil des Lichtes (42) emittiert, sowie eine obere Linse (12a) umfasst, die so angeordnet ist, dass sie einen anderen Anteil des Lichtes (46) emittiert, das von der Lichtquelle (16) emittiert wird, um beim Fahren des Fahrzeugs einen Bereich vor dem Fahrzeug für den Fahrer zu beleuchten.

5. Fahrzeug nach Anspruch 4, wobei die untere Linse (12b) in Bezug auf die obere Linse (12a) geneigt ist und/oder die untere Linse (12b) in der Längsrichtung des Fahrzeugs in Bezug auf einen unteren Abschnitt der oberen Linse (12a) zu der Lichtquelle (16) hin zurückgesetzt ist.

6. Fahrzeug nach Anspruch 4 oder 5, wobei die untere Linse (12b) unbeschichtet ist.

7. Fahrzeug nach einem der Ansprüche 3 bis 6, wobei die Linse (12) durchgehend mit der Verkleidung (20) ausgebildet ist.

8. Fahrzeug nach einem der Ansprüche 1 bis 7, wobei die Scheinwerfereinheit (10) einen Reflektor (14) umfasst, der vorzugsweise so angeordnet ist, dass er wenigstens einen Teil des Lichtanteils (42) auf das Lichtleitfenster (40) zu reflektiert.

9. Fahrzeug nach Anspruch 8, wobei der Reflektor (14) wenigstens eine vordere Öffnung umfasst, in die die Linse (12) eingesetzt ist.

10. Fahrzeug nach einem der Ansprüche 1 bis 9, das zwei Scheinwerfereinheiten (10, 10) umfasst, die an der linken und der rechten Seite des Fahrzeugs, vorzugsweise im wesentlichen V-förmig, angeordnet sind.

11. Fahrzeug nach einem der Ansprüche 1 bis 10, wobei das Lichtleitfenster (40) in einem Zwischenraum zwischen einer unteren Kante (18) der Scheinwerfereinheit (10) und der Verkleidung (20) vorhanden ist.

12. Fahrzeug nach einem der Ansprüche 1 bis 11, wobei das Lichtleitfenster (40) eine Sammellinse enthält, die Licht bündeln kann.

13. Fahrzeug nach einem der Ansprüche 1 bis 12, wobei das Lichtleitfenster (40) aus farbigem lichtdurchlässigem Material besteht.

## Revendications

1. Véhicule, en particulier véhicule du type à selle tel qu'une motocyclette, comprenant :
au moins une unité de phare (10) comportant au moins une source de lumière (16) ;
un carénage (20) disposé de manière à entourer l'unité de phare (10) ;
un garde-boue avant (30) disposé au-dessous du carénage (20) ; et
une fenêtre de guidage de lumière (40), à travers laquelle une portion de la lumière (42) émise par la source de lumière (16) rayonne vers l'extérieur, disposée au-dessous de l'unité de phare (10),
**caractérisé en ce que** la fenêtre de guidage de lumière (40) est disposée de manière à projeter ladite portion de lumière (42) sur le garde-boue avant (30) afin de former un motif prédéterminé (44) correspondant sensiblement à la forme prédéterminée de la fenêtre de guidage de lumière (40).

2. Véhicule selon la revendication 1, dans lequel le motif prédéterminé (44) est un motif sensiblement en forme de V.

3. Véhicule selon la revendication 1 ou 2, dans lequel l'unité de phare (10) comprend au moins une optique (12), possédant de préférence une surface inférieure disposée de manière à émettre la portion de lumière (42) provenant de l'unité de phare (10), de
préférence avant que ladite portion de lumière (42) n'atteigne la fenêtre de guidage de lumière (40).

4. Véhicule selon la revendication 3, dans lequel l'optique (12) comprend au moins une optique inférieure (12b) disposée de manière à émettre la portion de lumière susdite (42) et une optique supérieure (12a) disposée de manière à émettre une autre portion de lumière (46), émise par la source de lumière (16) pour éclairer une zone en avant du véhicule pour le conducteur lorsqu'il conduit ledit véhicule.

5. Véhicule selon la revendication 4, dans lequel l'optique inférieure (12b) est inclinée par rapport à l'optique supérieure (12a), et/ou dans la direction longitudinale du véhicule, l'optique inférieure (12b) est disposée en arrière par rapport à la portion inférieure de l'optique supérieure (12a) vers la source de lumière (16).

6. Véhicule selon la revendication 4 ou 5, dans lequel l'optique inférieure (12b) ne comporte pas de revêtement.

7. Véhicule selon l'une des revendications 3 à 6, dans lequel l'optique (12) est continue avec le carénage (20).

8. Véhicule selon l'une des revendications 1 à 7, dans lequel l'unité de phare (10) comprend un réflecteur (14) qui est disposé de préférence de manière à réfléchir au moins une partie de la portion de lumière susdite (42) vers la fenêtre de guidage de lumière (40).

9. Véhicule selon la revendication 8, dans lequel le réflecteur (14) comprend au moins une ouverture avant dans laquelle est ajustée l'optique (12).

10. Véhicule selon l'une des revendications 1 à 9, comprenant deux unités de phare (10, 10) qui sont agencées sur les côtés gauche et droit du véhicule, de préférence sensiblement en forme de V.

11. Véhicule selon l'une des revendications 1 à 10, dans lequel la fenêtre de guidage de lumière (40) est prévue dans un espace situé entre le bord inférieur (18) de l'unité de phare (10) et le carénage (20).

12. Véhicule selon l'une des revendications 1 à 11, dans lequel la fenêtre de guidage de lumière (40) comporte une optique condensatrice capable de concentrer la lumière.

13. Véhicule selon l'une des revendications 1 à 12, dans lequel la fenêtre de guidage de lumière (40) est faite d'un matériau coloré perméable à la lumière.
